# EUROPEAN PATENT SPECIFICATION

(11) **EP 4 306 833 B1**
(45) Date of publication and mention of the grant of the patent: **09.12.2026**
(21) Application number: 22766379.6
(22) Date of filing: 11.03.2022
(51) Int. Cl.: F16K 27/06, F16K 31/53, F16K 31/04, F16K 5/06

(54) **ELECTRIC VALVE**
ELEKTRISCHES VENTIL
SOUPAPE ÉLECTRIQUE

(30) Priority: 12.03.2021 CN 202110270941
(43) Date of publication of application: 17.01.2024
(73) Proprietor: Zhejiang Sanhua Automotive Components Co., Ltd., Hangzhou, Zhejiang 310018 (CN)
(72) Inventor: BIAN, Qikai, Hangzhou Economic & Technological Development Area Hangzhou, Zhejiang 310018 (CN); ZHAO, Yangjun, Hangzhou Economic & Technological Development Area Hangzhou, Zhejiang 310018 (CN); CHEN, Haitao, Hangzhou Economic & Technological Development Area Hangzhou, Zhejiang 310018 (CN)
(74) Representative: Maikowski & Ninnemann Patentanwälte Partnerschaft mbB
(86) International application number: PCT/CN2022/080309
(87) International publication number: WO 2022/188857

(56) References cited:
- WO-A1-2020/253480
- CN-A- 111 350 844
- CN-U- 208 651 778
- CN-U- 210 034 493
- CN-U- 210 739 507
- CN-U- 211 738 083
- JP-A- 2009 228 765
- JP-A- 2013 249 847

## Description

The present application claims the priority of the Chinese Patent Application No. 202110270941.7, titled "ELECTRIC VALVE", filed on March 12, 2021 with the China National Intellectual Property Administration.

### FIELD

The present application relates to an electric valve.

### BACKGROUND

An electric valve includes a control device, a valve component, a valve core and a valve body assembly, where the valve component includes a transmission mechanism, and the specific transmission component can be a planetary gear structure. The control device drives the valve core of the electric valve to move by the transmission mechanism so as to achieve the purpose of fluid blocking/communication. It may appear for the transmission mechanism, after running for a period of time, that powder impurities are produced and accumulated in an inner chamber of the electric valve, which is not conducive to the normal operation of the electric valve. How to reduce the accumulation of powder impurities in the inner chamber of the electric valve is a technical problem needed to be improved.

It is disclosed in CN 210 034 493 U an electric valve, which includes a driving mechanism, a transmission component, a valve body component, and a valve core. The transmission component includes a reduction mechanism, a gear shaft, and a first gear. The reduction mechanism is fixedly connected to the gear shaft. The gear shaft is directly or indirectly transmitted to the first gear. The first gear is eccentrically disposed. The electric valve further includes a valve stem. The first gear is fixed to one end of the valve stem, and the other end of the valve stem is fixed to the valve core. The driving mechanism drives the valve through the transmission component and the valve stem.

It is disclosed in CN 208 651 778 U an electric valve, including a control member, a housing member, a gear reduction mechanism, and a valve body member. The control member includes the cover body welded to the housing member, and a rotor member disposed in the cover body. The gear reduction mechanism includes an input gear portion, a gear ring, and an output carrier. The input gear portion is drivingly coupled to a rotating shaft of the rotor member. The housing member is welded and fixed. The lower end of the gear ring is provided with a recess. The output carrier includes a disk-like body portion and a protrusion, and the protrusion is disposed at a peripheral outer edge of the disk-like body portion. The protrusion is disposed in the recess to limit a circumferential rotation stroke of the output carrier.

### SUMMARY

An object of the present application is to provide an electric valve which is conducive to reducing powder impurities accumulating in an inner chamber of the electric valve.

In order to achieve the above object, the following technical solution is provided according to the present application:

An electric valve includes a valve member, a valve body assembly and a valve core, where the valve member includes a sleeve, a rotor assembly, a transmission mechanism and a connecting seat. The sleeve is provided with a sleeve chamber, in which the rotor assembly is arranged and the transmission mechanism is at least partially arranged, and the sleeve is connected with the connecting seat. A valve body chamber is formed in the valve body assembly, in which the valve core is arranged, and the valve core is in transmission connection with the transmission mechanism. The valve body assembly is connected with the connecting seat. The transmission mechanism includes a fixed gear ring and a planetary gear set, where the planetary gear set is at least partially arranged inside the fixed gear ring. The connecting seat is provided with an accommodating chamber, in which the fixed gear ring is at least partially arranged, and part of the fixed gear ring abuts against the connecting seat. The electric valve is provided with a passage, part of which is arranged between the connecting seat and the fixed gear ring, such that the passage is in communication with a part of the sleeve chamber located radially outside of the fixed gear ring and at a lower end of a rotor magnetic ring of the rotor assembly and an upper end of the connecting seat, and part of which is arranged at the connecting seat, and the passage can communicate the sleeve chamber and the valve body chamber.

According to the present application, with the configuration of the passage communicating the sleeve chamber and the valve body chamber, powder impurities accumulated in the sleeve chamber can flow into the valve body chamber through the passage, and by controlling the electric valve to be in communication with system pipeline/component, the powder impurities entering the valve body chamber can enter the system pipeline/component, which is beneficial to reducing the accumulation of powder impurities in the electric valve, improving the operating state of the electric valve and prolonging the service life.

### BRIEF DESCRIPTION OF THE DRAWINGS

FIG. 1 is a schematic cross-sectional structural view of a first embodiment of an electric valve;
FIG. 2 is another schematic cross-sectional structural view of the first embodiment of the electric valve;
FIG. 3 is a schematic cross-sectional structural view of a valve component shown in FIG. 1;
FIG. 4 is a schematic exploded structural view of a planetary gear set at all stages shown in FIG. 1;
FIG. 5 is a schematic perspective structural view of a fixed gear ring shown in FIG. 1 from one perspective;
FIG. 6 is schematic perspective structural view of the fixed gear ring shown in FIG. 1 from another perspective;
FIG. 7 is a schematic perspective structural view of a connecting seat shown in FIG. 1 from one perspective;
FIG. 8 is a schematic structural top view of the connecting seat shown in FIG. 7;
FIG. 9 is a schematic cross-sectional structural view of the connecting seat taken along A-A shown in FIG. 8;
FIG. 10 is a schematic perspective structural view of the connecting seat fitted with the fixed gear ring;
FIG. 11 is a partial enlarged view at portion D in FIG. 1;
FIG. 12 is a schematic cross-sectional structural view of a second embodiment of an electric valve;
FIG. 13 is a schematic structural view of the connecting seat according to the second embodiment from a top perspective.

### DETAILED DESCRIPTION OF THE EMBODIMENTS

The present application will be further described as follows in conjunction with the drawings and specific embodiments.

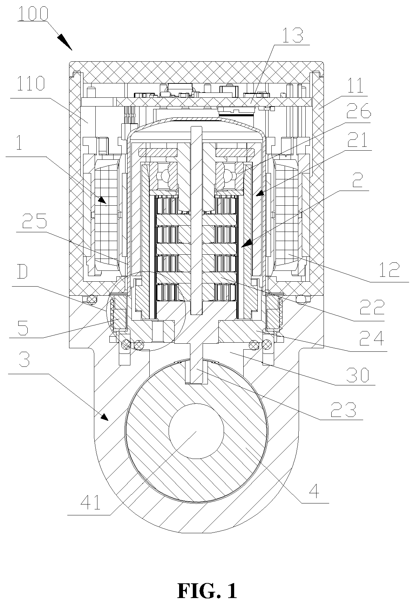

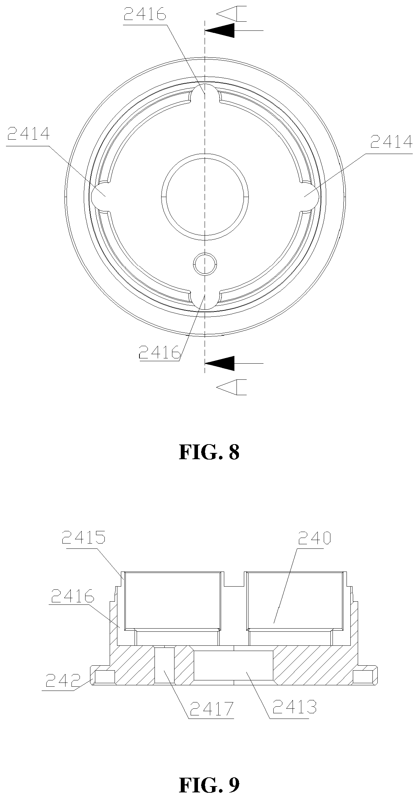

Referring to FIG. 1 to FIG. 10, an electric valve can be applied to a vehicle thermal management system or an air conditioning system. The electric valve 100 includes a control member 1, a valve member 2, a valve body assembly 3 and a valve core 4, where the valve body assembly 3 has a valve body chamber 30, in which the valve core 4 is arranged, and the valve core 4 is in transmission connection with the valve member 2. The control member 1 is arranged at an outer periphery of the valve member 2, and the control member 1 is fixedly or limitedly connected with the valve body assembly 3. The electric valve 100 is electrically connected and/or in a signal connection with the outside through the control member 1.

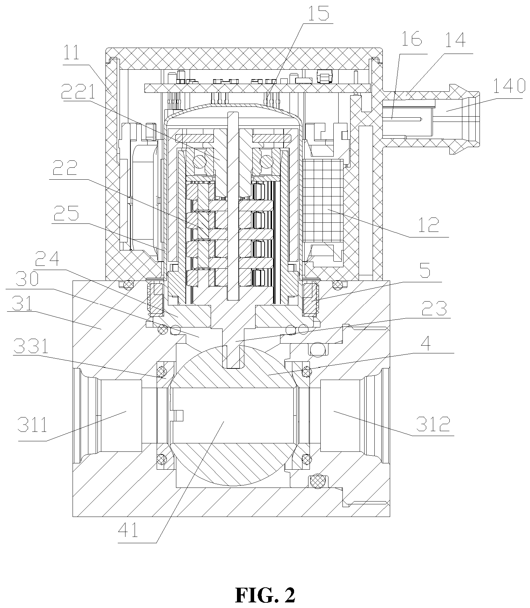

Referring to FIG. 1 and FIG. 2, in this embodiment, the control member 1 includes an outer housing 11, a stator assembly 12, a circuit board 13, an interface part 14, a first pin 15, and a second pin 16. The outer housing 11 can be formed with the interface part 14 by injection molding or can be connected with the interface part 14 by assembly, and the outer housing 11 is formed with a housing chamber 110, in which both the stator assembly 12 and the circuit board 13 are arranged. One end of the first pin 15 is electrically connected and/or in a signal connection with the stator assembly 12, the other end of the first pin 15 is electrically connected and/or in a signal connection with the circuit board 13, and the second pin 16 is fixedly connected with the interface part 14. Specifically, in this embodiment, the outer housing 11 and the interface part 14 can be formed by injection molding with the second pin 16 as an injection molding insert, and one end of the second pin 16 is arranged in the housing chamber 110 for electrical and/or signal connection with the circuit board 13, and the other end of the second pin 16 is arranged in a socket chamber 140 formed by the interface part 14 for electrical and/or signal connection with the outside. In this embodiment, the control member 1 is connected and fixed to the valve body assembly 3 by screws. Of course, in other embodiments, the control member 1 can also be connected and fixed to the valve body assembly 3 by welding, gluing or snapping. Further, the control member 1 can be arranged to be sealed with the valve body assembly 3, which on the one hand is beneficial to prevent water vapor or other impurities in the outside air from entering the housing chamber 110 through an assembly gap between the control member 1 and the valve body assembly 3 to contact with the stator assembly 12, resulting in corrosion or failure of the stator assembly 12, and on the other hand is beneficial to prevent water vapor or other impurities in the outside air from entering the valve body chamber 30 through the assembly gap between the control member 1 and the valve body assembly 3.

Referring to FIG. 1 to FIG.3, the valve member 2 includes a rotor assembly 21, a transmission mechanism 22, a valve rod 23, a connecting seat 24 and a sleeve 25. The sleeve 25 has a sleeve chamber 250, in which the rotor assembly 21 is arranged, and the sleeve 25 is fixedly connected with the connecting seat 24. In this embodiment, the sleeve 25 is fixedly connected with the connecting seat 24 by welding. The rotor assembly 21 has a rotor chamber 210, and the connecting seat 24 has an accommodating chamber 240. Part of the transmission mechanism 22 is arranged in the rotor chamber 210 and part of the transmission mechanism 22 is arranged in the accommodating chamber 240. The transmission mechanism 22 is in transmission connection with the valve rod 23 that is in transmission connection with the valve core 4. In this embodiment, the valve core 4 includes a spherical surface or a spherical-like surface. Of course, in other embodiments, the valve core 4 may be in other shapes, such as cylinder, frustum, cone, needle and the like. Part of the transmission mechanism 22 is arranged in the rotor chamber 210, which is beneficial to reduce axial height of the electric valve 100. In this embodiment, the transmission mechanism 22 is a planetary gear mechanism. Of course, in other embodiments, the transmission mechanism 22 is not limited to the planetary gear mechanism.

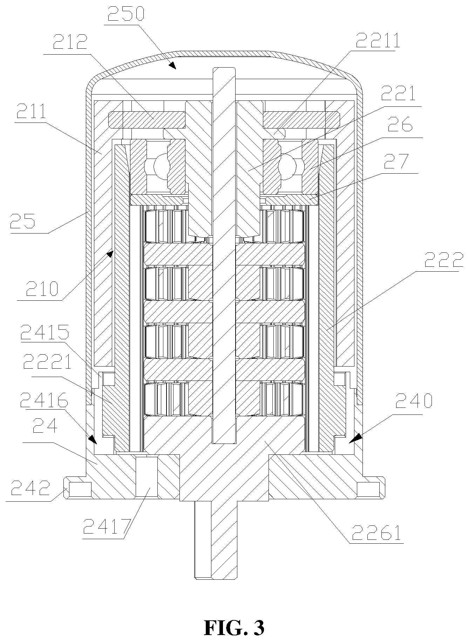

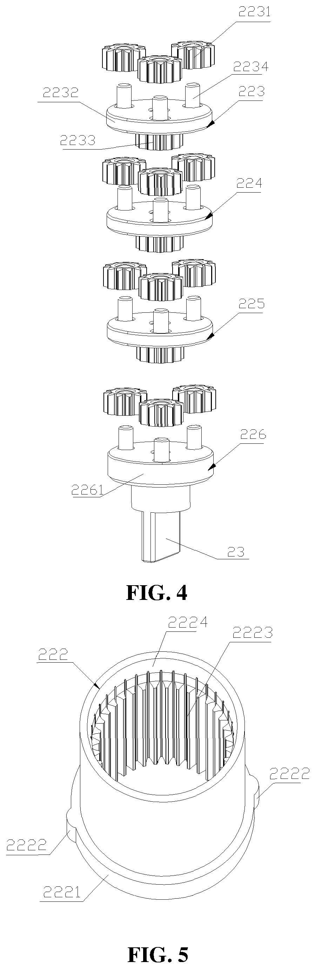

Referring to FIG. 3 and FIG. 4, the rotor assembly 21 includes a rotor magnetic ring 211 and a connecting plate 212. The rotor assembly 21 is formed by injection molding of the rotor magnetic ring 211 with the connecting plate 212 as an injection molding insert. The transmission mechanism 22 includes a sun gear 221, and the connecting plate 212 is fixedly connected with the sun gear 221. Of course, in other embodiments, the connecting plate 212 and the sun gear 221 can also be formed by injection molding. The transmission mechanism 22 further includes a fixed gear ring 222 and at least one-stage planetary gear set, where the fixed gear ring 222 is provided with internal teeth 2223 that are formed to be protruded inward along a radial direction of the fixed gear ring 222. The transmission mechanism 22 can be provided with multi-stage planetary gear set based on required transmission ratio, for example, in this embodiment, the transmission mechanism 22 includes a first planetary gear set 223, a second planetary gear set 224, a third planetary gear set 225 and an output planetary gear set 226 in sequence along an axial direction of the transmission mechanism 22. The fixed gear ring 222 is arranged at an outer periphery of the planetary gear set, where part of the fixed gear ring 222 is arranged in the rotor chamber 210, and part of the fixed gear ring 222 is arranged in the accommodating chamber 240, and the fixed gear ring 222 abuts against the connecting seat 24. Since the first planetary gear set 223, the second planetary gear set 224 and the third planetary gear set 225 have same structure, the first planetary gear set 223 will be taken as an example to be described. The first planetary gear set 223 includes a first planetary gear 2231, a first planetary carrier 2232 and a first column gear 2233, where the first planetary carrier 2232 and the first column gear 2233 can be formed by injection molding or assembled and fixed. In this embodiment, the first planetary carrier 2232 and the first column gear 2233 can be formed by injection molding. The first planetary gear set 223 further includes a first positioning shaft 2234, and the number of the first positioning shaft 2234 is equal to that of the first planetary gear 2231. In this embodiment, the number of the first positioning shaft 2234 and the first planetary gear 2231 each is three, and the first positioning shafts 2234 are even distributed along the outer periphery of the first planetary carrier 2232, and the first positioning shafts 2234 and the first planetary carrier 2232 can be formed by injection molding or be fixed and assembled. The first planetary gear 2231 is arranged outside the outer periphery of the first positioning shaft 2234, and is rotatably arranged on the first planetary carrier 2232 by the first positioning shaft 2234. The first planetary gear 2231 is meshed with the sun gear 221, and the first planetary gear 2231 is further meshed with the internal teeth 2223 of the fixed gear ring 222. In order to prevent the first planetary gear 2231 from moving along the axial direction of the first positioning shaft 2234 when the first planetary gear 2231 is rotating, in this embodiment, the valve member 2 further includes a bearing 26 and a gasket 27, where the bearing 26 is arranged at the outer periphery of the sun gear 221 and is in a transition fit with the sun gear 221, and the gasket 27 is arranged at the outer periphery of sun gear 221 and can be in a clearance fit with the sun gear 221. The sun gear 221 includes a convex part 2211, and the bearing 26 is arranged between the convex part 2211 and the gasket 27 along the axial direction of the sun gear 221, where one end of the bearing 26 abuts against the convex part 2211, and the other end of the bearing 26 abuts against the gasket 27. The fixed gear ring 222 includes a third step part 2224, which is arranged above the first planetary gear 2231, and the gasket 27 is arranged above and abuts against the third step part 2224, so that the first planetary gear 2231 can be axially limited by the gasket 27 and the first planetary carrier 2232. In addition, with the arrangement of the bearing 26, it is also beneficial to ensure the coaxiality of the sun gear 221 and the fixed gear ring 222.

Similarly, the second planetary gear set 224 includes a second planetary gear, a second planetary carrier, a second column gear and a second positioning shaft, where the second planetary gear is arranged at the outer periphery of the second positioning shaft, meshed with the first column gear and with the fixed gear ring 222, and axially limited by the first planetary carrier and the second planetary carrier. The third planetary gear set 225 includes a third planetary gear, a third planetary carrier, a third column gear and a third positioning shaft, where the third planetary gear is arranged at the outer periphery of the third positioning shaft, meshed with the second column gear and with the fixed gear ring 222, and axially limited by the second planetary carrier and the third planetary carrier. The output planetary gear set 226 includes a fourth planetary gear, a fourth positioning shaft and an output planetary gear carrier 2261. The output planetary gear carrier 2261 is in transmission connection with the valve rod 23 by injection molding or assembly and fixation. In this embodiment, the valve rod 23 and the output planetary gear carrier 2261 are formed by injection molding. The fourth planetary gear is arranged at the outer periphery of the fourth positioning shaft, meshed with the third column gear and with the fixed gear ring, and axially limited by the third planetary carrier and the output planetary carrier. It should be noted that the transmission mechanism 22 can be a made of plastic or metal material. In this embodiment, the transmission mechanism 22 is made of metal material, and components of the transmission mechanism 22 can be formed by powder metallurgy materials by injection molding, so that all of the components of the transmission mechanism 22 have good wear resistance.

Referring to FIG. 1 and FIG. 2, the valve body assembly 3 includes a valve body 31, a first flow passage 311 and a second flow passage 312. The valve body 31 has a valve body chamber 30, in which a valve core 4 is arranged. The valve member 2 is in transmission connection with the valve core 4 by the valve rod 23 and is fixedly connected to the valve body 31. Specifically, in this embodiment, the valve member 2 is fixedly connected with the valve body 31 by a compression nut 5. Of course, in other embodiments, the valve member 2 can also be fixedly connected with the valve body 31 by welding or gluing or threaded connection or the like. Further, a sealing arrangement can be arranged between the valve member 2 and the valve body assembly 3, which can prevent the fluid from leaking from the assembly gap between the valve member 2 and the valve body assembly 3. The valve core 4 has a pore passage 41 running through the valve core 4, and the pore passage 41 is configured to communicate or not communicate the first flow passage 311 with the second flow passage 312 by rotating the valve core 4, that is, the electric valve 100 can control fluid to be blocked or in communication by rotating the valve core 4. In this embodiment, the electric valve 100 is a two-way valve, but of course, in other embodiments, the electric valve can also be a three-way valve, a four-way valve or other multi-way valve.

The working principle of the electric valve 100 is as follows: after the control member 1 is powered on, the stator assembly 12 generates an excitation magnetic field, and the rotor assembly 21 drives the sun gear 221 to rotate under the excitation of the magnetic force. The sun gear 221 meshes with the first planetary gear 2231, which further meshes with the fixed gear ring 222, and the fixed gear ring 222 is fixedly arranged, and thus the first planetary gear 2231 rotates and at the same time drives the first planetary carrier 2232 to rotate through the first positioning shaft 2234. The rotation of the first planetary carrier 2232 in turn drives the first column gear 2233, which is meshed with the second planetary gear, to rotate, and the second planetary gear is meshed with the fixed gear ring 222. That is, under the action of the first column gear 2233, the second planetary gear drives the second planetary carrier to rotate through the second positioning shaft. The second planetary carrier drives the second column gear, which is further meshed with the third planetary gear, to rotate, and the third planetary gear is meshed with the fixed gear ring 222, and so on. Finally, the fourth planetary gear drives the output planetary carrier 2261 to rotate through the fourth positioning shaft. The output planetary carrier 2261 is formed with the valve rod 23 by injection molding and in turn drives the valve rod 23 to rotate. The valve rod 23 is in transmission connection with the valve core 4, and the rotation of the valve rod 23 drives the valve core 4 to rotate. With the rotation of the valve core 4, the pore passage 41 of the valve core 4 can communicate or block the first flow passage 311 with the second flow passage 312, thus realizing the block or communication of the fluid controlled by the electric valve 100.

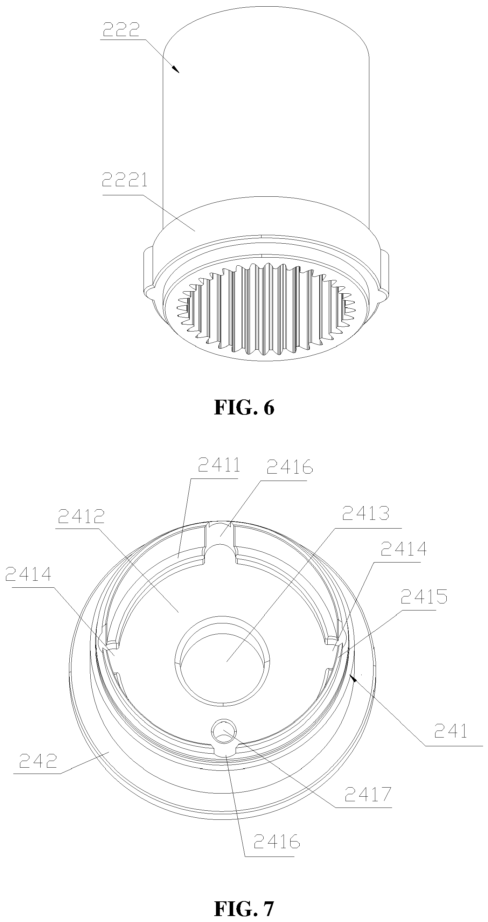

As shown in FIG. 7 to FIG. 9, the connecting seat 24 includes a main body part 241 and a second flange part 242, which extends outward from the outer periphery of the side wall of the main body part 241 in the radial direction. The compression nut 5 is sleeved on the radial outer periphery of the side wall of the main body part 241 of the connecting seat, abuts against the upper surface of the second flange part 242, and is screwed with the valve body 31, so that the connecting seat 24 is fixedly connected with the valve body 31. The main body part 241 is formed with an accommodating chamber 240 and has a through hole 2413 as an opening of the accommodating chamber 240. The through hole 2413 is axially arranged in the center of the main body part 241, and the main body part 241 includes a first step part 2411 and a second step part 2412, where the second step part 2412 is arranged closer to the valve core 4 than the first step part 2411 along the axial direction of the connecting seat 24. The main body part 241 further has a positioning part 2414 arranged above the second step part 2412. The number of the positioning part 2414 may be one or two or more, and in this embodiment, the number of the positioning part is two, and the two positioning parts 2414 are symmetrically arranged about the axis of the connecting seat 24. The connecting seat 24 further includes a crimping part 2415, which is arranged at the upper end of the main body part 241 and used for fixed connection with the fixed gear ring 222. The connecting seat 24 can be made of metal material, for example, the required structure and shape can be obtained by stainless steel through cutting.

As shown in FIG. 5 and FIG. 6, the fixed gear ring 222 has a first flange part 2221. The first flange part 2221 is arranged at one end, which is closed to the valve body 31, of the fixed gear ring 222 and extends outward from the outer peripheral wall of the fixed gear ring 222 in the radial direction. The fixed gear ring 222 further has a matching part 2222 that fits with the positioning part 2414, and the matching part 2222 is formed by protruding from the outer periphery of the first flange part 2221. In this embodiment, the positioning part 2414 of the connecting seat 24 is a semi-cylindrical concave part, and correspondingly, the matching part 2222 is a semi-cylindrical protrusion fitting with the concave part. It can be understood that shape of each of the positioning part 2414 and the matching part 2222 is not limited to the semi-cylindrical shape shown in the drawing, but also can be triangular, rectangular and other shape, and the positioning part 2414 can also be a convex part and the corresponding mating part 2222 can be a concave part.

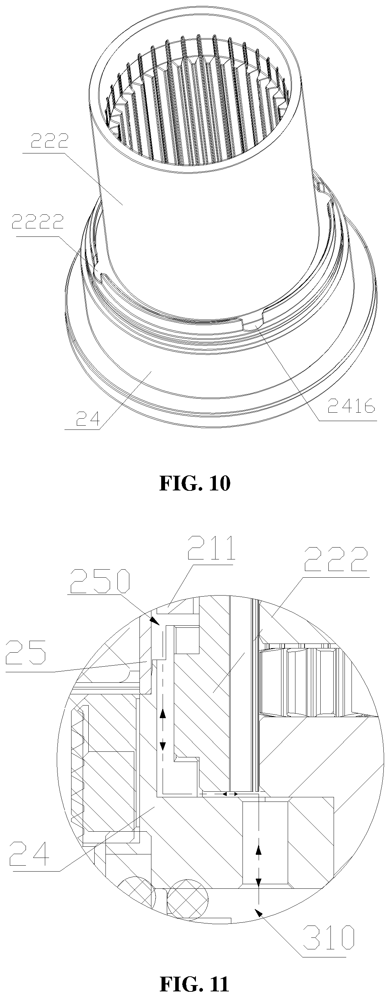

Referring to FIG. 10, FIG. 10 is a schematic structural view of the connecting seat 24 fitted with the fixed gear ring 222. The fixed gear ring 222 is fixedly connected with the connecting seat 24. During assembly, the fixed gear ring 222 is first pressed into the connecting seat 24 from top to bottom, so that the lower surface of the first flange part 2221 of the fixed gear ring 222 abuts against the first step part 2411, and the outer peripheral surface of the first flange part 2221 abuts against the inner periphery of the side wall of the main body part 241 of the connecting seat. The matching part 2222 of the fixed gear ring 222 fits with the positioning part 2414 of the connecting seat 24, and then the crimping part 2415 of the connecting seat 24 is fixed to the fixed gear ring 222 by a crimping way. Of course, in other embodiments, the fixed gear ring 222 can also be fixedly connected with the connecting seat 24 by welding or gluing or the like. The output planetary carrier 2261, formed with the valve rod 23 by injection molding, partially passes through the through hole 2413 and is connected with the valve core 4, and part of the output planetary carrier 2261 abuts against the second step part 2412, through which the output planetary carrier 2261 is axially limited and supported, and there is a certain gap between the lower end face of the fixed gear ring 222 and the upper end face of the second step part 2412.

During the operation of the electric valve, the transmission mechanism 22 will generate some powder impurities due to friction losses between the sun gear 221 and the planetary gear set, between the planetary gear set and the planetary gear set, and between the planetary gear set and the fixed gear ring 222. The powder impurities may accumulate in the sleeve chamber 250 arranged at the outer periphery of the fixed gear ring 222, the lower end of the rotor magnetic ring 211 and the upper end of the connecting seat 24, or even be adsorbed on the surface of the rotor magnetic ring 211, increasing the friction resistance between the rotor assembly 21 and the sleeve 25, which is not conducive to the normal operation of the electric valve. Therefore, the electric valve of this embodiment includes a passage which communicates the sleeve chamber 250 with the valve body chamber 310. Specifically, the connecting seat 24 further has a communicating part 2416, which is axially arranged along the inner peripheral wall of the main body part 241. The wall thickness of the main body part, where the communicating part 2416 is arranged, is less than that where the communicating part is not arranged, so there is a gap between the outer peripheral surface of the first flange part 2221 of the fixed gear ring 222 and the inner peripheral wall of the main body 241 of the connecting seat at the position where the communicating part 2416 is arranged. The lower end face of the communicating part 2416 is arranged below the lower end face of the fixed gear ring 222, which is arranged below the upper surface of the first step part 2411 or abuts against the upper surface of the first step part 2411, thus the lower end face of the communicating part 2416 is arranged below the upper surface of the first step part 2411, and the first step part 2411 is no longer a closed circular step due to the existence of the communicating part 2416. The number of the communicating part 2416 may be one or two or more. The connecting seat 24 further has a communicating hole 2417, which is arranged in the axial direction and penetrates through the second step part 2412. The communicating hole 2417 is at least partially arranged outside the output planetary carrier 2261, so that the output planetary carrier 2261 does not completely cover the communicating hole 2417, resulting in the communicating hole 2417 cannot perform the function of communication. The number of communicating hole 2417 may be one or more.

Since there is a gap between the outer peripheral surface of the first flange part 2221 of the fixed gear ring 222 and the inner peripheral wall of the main body part 241 of the connecting seat at the communicating part 2416, and the lower end face of the communicating part 2416 is arranged below the lower end face of the fixed gear ring 222, and there is a certain gap between the lower end face of the fixed gear ring 222 and the upper end face of the second step part 2412, and thus the communicating part 2416 can be in communication with the communicating hole 2417 through the gap between the lower end face of the fixed gear ring 222 and the second step part 2412. The passage includes a communicating part 2416, a gap between the lower end face of the fixed gear ring 222 and the second step part 2412, and a communicating hole 2417. Referring to FIG. 11, the passage communicates the sleeve chamber 250, which is arranged at the outer periphery of the fixed gear ring 222 and at the lower end of the rotor magnetic ring 211 and the upper end of the connecting seat 24, with the valve body chamber 310 where the valve core 4 is arranged, and the sleeve chamber 250 is in communication with the rotor chamber 210, and thus the powder impurities accumulated in the sleeve chamber 250 can enter the rotor chamber 210 and the valve body chamber 310 through the passage. Especially when the electric valve is turned on or off, under the action of pressure difference, powder impurities can be moved upward into the rotor chamber 210 or downward into the valve body chamber 310 through the passage. Through the fit clearance between the valve core 4 and the valve core seat 331, the powder impurities in the valve body chamber 310 can enter the pore passage 41 of the valve core 4, the first flow passage 311 and the second flow passage 312 in communication with the pore passage 41, and can enter the system pipeline or components connected with the electric valve through the first flow passage 311 and the second flow passage 312, which is beneficial to reducing the accumulation of powder impurities and prolonging the service life of the electric valve.

In this embodiment, in order to facilitate of processing and installation, the communicating part 2416 and the positioning part 2414 have same structure, each of which is a semi-cylindrical concave part and the number of which is two, that is, there are four concave parts, which are distributed along the circumference and symmetrical about the axis two-to-two. Since the communicating part 2416 and the positioning part 2414 have the same structure, when two concave parts symmetrical about the axis are fitted with the matching part 2222 of the fixed gear ring 222 to serve as positioning parts, the remaining two concave parts symmetrical about the axis can serve as communicating parts to realize the communication function. Of course, the structures of the communicating part and the positioning part can also be different, for example, the communicating part may be in a rectangular shape, the positioning part may be in form of a semi-cylindrical concave part, and the matching part is a semi-cylindrical protrusion, where the positioning part and the matching part are mutually fitted and positioned.

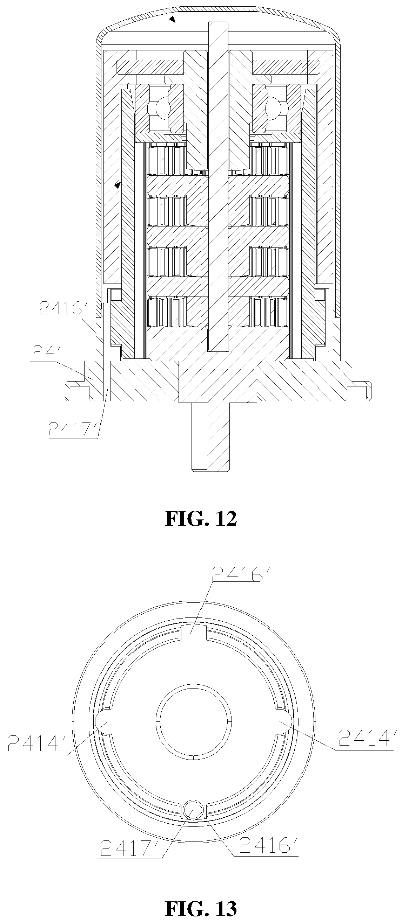

Referring to FIG. 12 to FIG.13, FIG. 12 is a schematic cross-sectional structural view of the second embodiment of the valve component of the electric valve. Different from the first embodiment, in this embodiment, the communicating hole 2417' is arranged below the communicating part 2416', and the passage includes the communicating part 2416' and the communicating hole 2417'. The passage communicates the sleeve chamber and the valve body chamber, and the powder impurities accumulated in the sleeve chamber can enter the rotor chamber and the valve body chamber which are in communication with the sleeve chamber through the passage. In the case that it is allowed by the structure of the connecting seat 24', it can be arranged as shown in this embodiment. Since the bottom part of the connecting seat needs to be provided with a sealing ring to prevent the working medium from leaking, if the connecting seat shown in FIG. 1 is provided with a communicating hole below the communicating part, the mounting position of the sealing ring is insufficient, so it is necessary to make some adjustments to the structure of the bottom part of the connecting seat or the position of the sealing ring, such as widening the diameter of the bottom part of the connecting seat, and the structure of the corresponding valve body assembly also needs to be adjusted. The adjusted structure of the valve body assembly and the position of the sealing ring will not be described in this embodiment, and relevant technicians can design and adjust by themselves.

Referring to FIG. 13, FIG. 13 is a schematic structural view of the connecting seat according to the second embodiment from a top perspective. Different from the first embodiment, in this embodiment, the communicating part 2416' and the positioning part 2414' are different in structure. The communicating part 2416' is a substantial rectangular concave part, and the positioning part 2414' is still the same semi-cylindrical concave part with the previous embodiment. The corresponding matching part of the fixed gear ring is a semi-cylindrical protrusion, and the positioning part 2414' is positioned with the matching part, so that the design can perform a fool-proofing function to avoid assembly errors.

It should be noted that, the above embodiments are only used to illustrate the present application rather than limit the technical solutions described in the present application. Although the present application is described in detail in this specification with reference to the above embodiments, those of ordinary skilled in the art should understand that those skilled in the art may still modify or equivalently replace the present application, and all technical solutions and improvements thereof that do not depart from the scope of the claims of the present application.

## Claims

1. An electric valve, comprising a valve component (2), a valve body assembly (3) and a valve core (4), wherein the valve component (2) comprises a sleeve (25), a rotor assembly (21), a transmission mechanism (22) and a connecting seat (24); the sleeve (25) is provided with a sleeve chamber (250), in which the rotor assembly (21) is arranged and the transmission mechanism (22) is at least partially arranged, and the sleeve (25) is connected with the connecting seat (24);
wherein a valve body chamber (30) is formed in the electric valve, the valve core (4) is arranged in the valve body chamber (30), and the valve core (4) is in transmission connection with the transmission mechanism (22); the valve body assembly (3) is connected with the connecting seat (24);
wherein the transmission mechanism (22) comprises a fixed gear ring (222) and a planetary gear set (223-226), the planetary gear set is at least partially arranged inside the fixed gear ring (222); the connecting seat (24) is provided with an accommodating chamber (240), in which the fixed gear ring (222) is at least partially arranged, and part of the fixed gear ring (222) abuts against the connecting seat (24); and
wherein the electric valve is provided with a passage, part of which is arranged between the connecting seat (24) and the fixed gear ring (222) such that the passage is in communication with a part of the sleeve chamber (250) located radially outside of the fixed gear ring (222) and at a lower end of a rotor magnetic ring (211) of the rotor assembly (21) and an upper end of the connecting seat (24), and part (2417) of which is arranged at the connecting seat (24), and the passage communicates the sleeve chamber (250) with the valve body chamber (30).

2. The electric valve according to claim 1, wherein the connecting seat (24) has a communicating part (2416) and a communicating hole (2417), the communicating part (2416) is arranged at one side, close to the fixed gear ring (222), of the connecting seat (24) and is arranged along the axial direction of the connecting seat (24); and
wherein the communicating hole (2417) is arranged along the axial direction of the connecting seat (24) and penetrates through the connecting seat (24).

3. The electric valve according to claim 2, wherein a gap is provided between a lower end face of the fixed gear ring (222) and the connecting seat (24), and a lower end face of the communicating part (2416) is closer to the valve core (4) than the lower end face of the fixed gear ring (222) is; and
wherein the communicating part (2416) is in communication with the communicating hole (2417) through the gap between the lower end face of the fixed gear ring (222) and the connecting seat (24), and the passage comprises the communicating part (2416), the gap between the lower end face of the fixed gear ring (222) and the connecting seat (24), and the communicating hole (2417).

4. The electric valve according to claim 2, wherein the communicating hole (2417) is arranged below the communicating part (2416) in communication with the communicating hole (2417).

5. The electric valve according to claim 3 or 4, wherein the connecting seat (24) comprises a first step part (2411) and a second step part (2412), which is closer to the valve core (4) than the first step part (2411) is; the fixed gear ring (222) has a first flange part (2221), a lower surface of which abuts against the first step part (2411); a lower end face of the communicating part (2416) is arranged below an upper end face of the first step part (2411); and wherein the communicating part (2416) is a concave part so that a preset gap is provided between the connecting seat (24) at the communicating part (2416) and an outer peripheral surface of the first flange part (2221).

6. The electric valve according to claim 5, wherein the communicating hole (2417) extends through the second step part (2412) along the axial direction, and a gap is provided between the lower end face of the fixed gear ring (222) and an upper end face of the second step part (2412), and wherein the passage comprises the communicating part (2416), the gap between the lower end face of the fixed gear ring (222) and the upper end face of the second step part, and the communicating hole (2417).

7. The electric valve according to claim 5, wherein the connecting seat (24) comprises a positioning part (2414) and a crimping part (2415), where the positioning part (2414) is arranged at an inner periphery of the connecting seat (24), and the number of the positioning part (2414) is two or more; the crimping part (2415) is arranged at an upper part of the connecting seat (24); the fixed gear ring (222) comprises a matching part (2222), which is arranged at the outer periphery surface of the first flange part (2221), and the number of the matching part (2222) is as same as that of the positioning part (2414); and
wherein the matching part (2222) is fitted with the positioning part (2414), and the connecting seat (24) is fixedly connected to the fixed gear ring (222) by crimping.

8. The electric valve according to claim 6, wherein the positioning part (2414) is a concave part, and the matching part (2222) is a protrusion matched with the positioning part (2414); or the positioning part (2414) is a protrusion, and the matching part (2222) is a concave part matched with the positioning part (2414).

9. The electric valve according to claim 5, wherein the planetary gear set comprises an output planetary carrier (2261), and the electric valve further comprises a valve rod (23), where the output planetary carrier is fixedly connected with the valve rod (23) or is formed with the valve rod (23) by injection molding; the output planetary carrier (2261) is at least partially arranged in the accommodating chamber (240) of the connecting seat (24); the output planetary carrier (2261) abuts against the second step part (2412); and
wherein the connecting seat (24) further comprises a through hole (2417) which is axially arranged, and the valve rod (23) is connected with the valve core (4) through the through hole (2417).

10. The electric valve according to claim 6, wherein the planetary gear set comprises an output planetary carrier (2261), and the electric valve further comprises a valve rod (23), where the output planetary carrier (2261) is fixedly connected with the valve rod (23) or is formed with the valve rod (23) by injection molding; the output planetary carrier (2261) is at least partially arranged in the accommodating chamber (240) of the connecting seat (24); the output planetary carrier (2261) abuts against the second step part (2412); and
wherein the connecting seat (24) further comprises a through hole (2417), which is axially arranged, and the valve rod (23) is connected with the valve core (4) through the through hole (2417).

11. The electric valve according to any one of claims 2 to 4 or claims 6 to 10, wherein the connecting seat (24) comprises a main body part (241) and a second flange part (242), the second flange part (242) extends outward from an outer periphery of a side wall of the main body part (241) in the radial direction; and the electric valve further comprises a compression nut (5), which is sleeved on the radial outer periphery of the side wall of the main body part (241), abuts against an upper surface of the second flange part (242), and is in threaded connection with the valve body assembly (3); and
wherein the communicating part (2416) and the communicating hole (2417) are arranged at an inner periphery of the side wall of the main body part (241).

12. The electric valve according to claim 5, wherein the connecting seat (24) comprises a main body part (241) and a second flange part (242), where the second flange part (242) extends outwards from an outer periphery of a side wall of the main body part (241) in the radial direction, and the electric valve further comprises a compression nut (5) which is sleeved on the radial outer periphery of the side wall of the main body part (241), abuts against an upper surface of the second flange part (242), and is in threaded connection with the valve body assembly (3); and
wherein the communicating part (2416) and the communicating hole (2417) are arranged at an inner periphery of the side wall of the main body part (241).

13. The electric valve according to claim 11, wherein the valve core (4) has a pore passage (41), and the valve body assembly (3) has a first flow passage (311) and a second flow passage (312); and wherein the pore passage (41) is configured to communicate or block the first flow passage (311) with the second flow passage (312) by rotating the valve core (4).

## Patentansprüche

1. Elektrisches Ventil, umfassend eine Ventilkomponente (2), eine Ventilkörperbaugruppe (3) und einen Ventilkern (4), wobei die Ventilkomponente (2) eine Hülse (25), eine Rotorbaugruppe (21), einen Übertragungsmechanismus (22) und einen Verbindungssitz (24) umfasst; die Hülse (25) ist mit einer Hülsenkammer (250) versehen, in der die Rotorbaugruppe (21) angeordnet ist und der Übertragungsmechanismus (22) zumindest teilweise angeordnet ist, und die Hülse (25) ist mit dem Verbindungssitz (24) verbunden;
wobei in dem elektrischen Ventil eine Ventilkörperkammer (30) ausgebildet ist, der Ventilkern (4) in der Ventilkörperkammer (30) angeordnet ist und der Ventilkern (4) mit dem Übertragungsmechanismus (22) in einer Übertragungsverbindung steht; die Ventilkörperbaugruppe (3) ist mit dem Verbindungssitz (24) verbunden;
wobei der Übertragungsmechanismus (22) einen feststehenden Zahnkranz (222) und einen Planetenradsatz (223-226) umfasst, der Planetenradsatz zumindest teilweise innerhalb des feststehenden Zahnkranzes (222) angeordnet ist; der Verbindungssitz (24) ist mit einer Aufnahmekammer (240) versehen, in der der feststehende Zahnkranz (222) zumindest teilweise angeordnet ist, und ein Teil des feststehenden Zahnkranzes (222) liegt an dem Verbindungssitz (24) an; und
wobei das elektrische Ventil mit einem Durchgang versehen ist, von dem ein Teil zwischen dem Verbindungssitz (24) und dem feststehenden Zahnkranz (222) so angeordnet ist, dass der Durchgang mit einem Teil der Hülsenkammer (250) in Verbindung steht, der radial außerhalb des feststehenden Zahnkranzes (222) und an einem unteren Ende eines Rotormagnetrings (211) der Rotorbaugruppe (21) und einem oberen Ende des Verbindungssitzes (24) gelegen ist, und von dem ein Teil (2417) an dem Verbindungssitz (24) angeordnet ist, und der Durchgang die Hülsenkammer (250) mit der Ventilkörperkammer (30) verbindet.

2. Elektrisches Ventil nach Anspruch 1, wobei der Verbindungssitz (24) einen Verbindungsabschnitt (2416) und ein Verbindungsloch (2417) aufweist, der Verbindungsabschnitt (2416) an einer Seite des Verbindungssitzes (24) nahe dem feststehenden Zahnkranz (222) angeordnet ist und entlang der axialen Richtung des Verbindungssitzes (24) angeordnet ist; und
wobei das Verbindungsloch (2417) entlang der axialen Richtung des Verbindungssitzes (24) angeordnet ist und den Verbindungssitz (24) durchdringt.

3. Elektrisches Ventil nach Anspruch 2, wobei zwischen einer unteren Stirnfläche des feststehenden Zahnkranzes (222) und dem Verbindungssitz (24) ein Spalt vorgesehen ist und eine untere Stirnfläche des Verbindungsabschnitts (2416) näher an dem Ventilkern (4) liegt als die untere Stirnfläche des feststehenden Zahnkranzes (222); und
wobei der Verbindungsabschnitt (2416) durch den Spalt zwischen der unteren Stirnfläche des feststehenden Zahnkranzes (222) und dem Verbindungssitz (24) mit dem Verbindungsloch (2417) in Verbindung steht und der Durchgang den Verbindungsabschnitt (2416), den Spalt zwischen der unteren Stirnfläche des feststehenden Zahnkranzes (222) und dem Verbindungssitz (24) und das Verbindungsloch (2417) umfasst.

4. Elektrisches Ventil nach Anspruch 2, wobei das Verbindungsloch (2417) unterhalb des mit dem Verbindungsloch (2417) in Verbindung stehenden Verbindungsabschnitts (2416) angeordnet ist.

5. Elektrisches Ventil nach Anspruch 3 oder 4, wobei der Verbindungssitz (24) einen ersten Stufenabschnitt (2411) und einen zweiten Stufenabschnitt (2412) umfasst, der näher an dem Ventilkern (4) liegt als der erste Stufenabschnitt (2411); der feststehende Zahnkranz (222) weist einen ersten Flanschabschnitt (2221) auf, dessen untere Oberfläche an dem ersten Stufenabschnitt (2411) anliegt; eine untere Stirnfläche des Verbindungsabschnitts (2416) ist unterhalb einer oberen Stirnfläche des ersten Stufenabschnitts (2411) angeordnet; und wobei der Verbindungsabschnitt (2416) ein konkaver Abschnitt ist, sodass ein vorgegebener Spalt zwischen dem Verbindungssitz (24) an dem Verbindungsabschnitt (2416) und einer äußeren Umfangsfläche des ersten Flanschabschnitts (2221) vorgesehen ist.

6. Elektrisches Ventil nach Anspruch 5, wobei sich das Verbindungsloch (2417) entlang der axialen Richtung durch den zweiten Stufenabschnitt (2412) erstreckt und zwischen der unteren Stirnfläche des feststehenden Zahnkranzes (222) und einer oberen Stirnfläche des zweiten Stufenabschnitts (2412) ein Spalt vorgesehen ist, und wobei der Durchgang den Verbindungsabschnitt (2416), den Spalt zwischen der unteren Stirnfläche des feststehenden Zahnkranzes (222) und der oberen Stirnfläche des zweiten Stufenabschnitts und das Verbindungsloch (2417) umfasst.

7. Elektrisches Ventil nach Anspruch 5, wobei der Verbindungssitz (24) einen Positionierungsabschnitt (2414) und einen Crimpabschnitt (2415) umfasst, wobei der Positionierungsabschnitt (2414) an einem inneren Umfang des Verbindungssitzes (24) angeordnet ist und die Anzahl der Positionierungsabschnitte (2414) zwei oder mehr beträgt; der Crimpabschnitt (2415) ist an einem oberen Teil des Verbindungssitzes (24) angeordnet; der feststehende Zahnkranz (222) umfasst einen Passabschnitt (2222), der an der äußeren Umfangsfläche des ersten Flanschabschnitts (2221) angeordnet ist, und die Anzahl der Passabschnitte (2222) ist gleich derjenigen der Positionierungsabschnitte (2414); und
wobei der Passabschnitt (2222) mit dem Positionierungsabschnitt (2414) passend zusammengefügt ist und der Verbindungssitz (24) durch Crimpen fest mit dem feststehenden Zahnkranz (222) verbunden ist.

8. Elektrisches Ventil nach Anspruch 6, wobei der Positionierungsabschnitt (2414) ein konkaver Abschnitt ist und der Passabschnitt (2222) ein mit dem Positionierungsabschnitt (2414) zusammenpassender Vorsprung ist; oder der Positionierungsabschnitt (2414) ein Vorsprung ist und der Passabschnitt (2222) ein mit dem Positionierungsabschnitt (2414) zusammenpassender konkaver Abschnitt ist.

9. Elektrisches Ventil nach Anspruch 5, wobei der Planetenradsatz einen Abtriebsplanetenträger (2261) umfasst und das elektrische Ventil ferner eine Ventilstange (23) umfasst, wobei der Abtriebsplanetenträger fest mit der Ventilstange (23) verbunden ist oder mit der Ventilstange (23) durch Spritzgießen ausgebildet ist; der Abtriebsplanetenträger (2261) ist zumindest teilweise in der Aufnahmekammer (240) des Verbindungssitzes (24) angeordnet; der Abtriebsplanetenträger (2261) liegt an dem zweiten Stufenabschnitt (2412) an; und
wobei der Verbindungssitz (24) ferner ein Durchgangsloch (2417) umfasst, das axial angeordnet ist, und die Ventilstange (23) durch das Durchgangsloch (2417) mit dem Ventilkern (4) verbunden ist.

10. Elektrisches Ventil nach Anspruch 6, wobei der Planetenradsatz einen Abtriebsplanetenträger (2261) umfasst und das elektrische Ventil ferner eine Ventilstange (23) umfasst, wobei der Abtriebsplanetenträger (2261) fest mit der Ventilstange (23) verbunden ist oder mit der Ventilstange (23) durch Spritzgießen ausgebildet ist; der Abtriebsplanetenträger (2261) ist zumindest teilweise in der Aufnahmekammer (240) des Verbindungssitzes (24) angeordnet; der Abtriebsplanetenträger (2261) liegt an dem zweiten Stufenabschnitt (2412) an; und
wobei der Verbindungssitz (24) ferner ein Durchgangsloch (2417) umfasst, das axial angeordnet ist, und die Ventilstange (23) durch das Durchgangsloch (2417) mit dem Ventilkern (4) verbunden ist.

11. Elektrisches Ventil nach einem der Ansprüche 2 bis 4 oder der Ansprüche 6 bis 10, wobei der Verbindungssitz (24) einen Hauptkörperabschnitt (241) und einen zweiten Flanschabschnitt (242) umfasst, der zweite Flanschabschnitt (242) sich von einem äußeren Umfang einer Seitenwand des Hauptkörperabschnitts (241) in radialer Richtung nach außen erstreckt; und das elektrische Ventil ferner eine Druckmutter (5) umfasst, die auf den radial äußeren Umfang der Seitenwand des Hauptkörperabschnitts (241) aufgeschoben ist, an einer oberen Oberfläche des zweiten Flanschabschnitts (242) anliegt und mit der Ventilkörperbaugruppe (3) in einer Gewindeverbindung steht; und
wobei der Verbindungsabschnitt (2416) und das Verbindungsloch (2417) an einem inneren Umfang der Seitenwand des Hauptkörperabschnitts (241) angeordnet sind.

12. Elektrisches Ventil nach Anspruch 5, wobei der Verbindungssitz (24) einen Hauptkörperabschnitt (241) und einen zweiten Flanschabschnitt (242) umfasst, wobei der zweite Flanschabschnitt (242) sich von einem äußeren Umfang einer Seitenwand des Hauptkörperabschnitts (241) in radialer Richtung nach außen erstreckt und das elektrische Ventil ferner eine Druckmutter (5) umfasst, die auf den radial äußeren Umfang der Seitenwand des Hauptkörperabschnitts (241) aufgeschoben ist, an einer oberen Oberfläche des zweiten Flanschabschnitts (242) anliegt und mit der Ventilkörperbaugruppe (3) in einer Gewindeverbindung steht; und
wobei der Verbindungsabschnitt (2416) und das Verbindungsloch (2417) an einem inneren Umfang der Seitenwand des Hauptkörperabschnitts (241) angeordnet sind.

13. Elektrisches Ventil nach Anspruch 11, wobei der Ventilkern (4) einen Öffnungskanal (41) aufweist und die Ventilkörperbaugruppe (3) einen ersten Strömungskanal (311) und einen zweiten Strömungskanal (312) aufweist; und wobei der Öffnungskanal (41) dazu eingerichtet ist, durch Drehen des Ventilkerns (4) den ersten Strömungskanal (311) mit dem zweiten Strömungskanal (312) zu verbinden oder die Verbindung zu blockieren.

## Revendications

1. Soupape électrique, comprenant un composant de soupape (2), un ensemble de corps de soupape (3) et un noyau de soupape (4), dans laquelle le composant de soupape (2) comprend un manchon (25), un ensemble de rotor (21), un mécanisme de transmission (22) et un siège de raccordement (24) ; le manchon (25) est pourvu d'une chambre du manchon (250), dans laquelle l'ensemble de rotor (21) est disposé et le mécanisme de transmission (22) est au moins partiellement disposé, et le manchon (25) est relié au siège de raccordement (24);
dans laquelle une chambre de corps de soupape (30) est formée dans la soupape électrique, le noyau de soupape (4) est disposé dans la chambre de corps de soupape (30), et le noyau de soupape (4) est en liaison de transmission avec le mécanisme de transmission (22); l'ensemble de corps de soupape (3) est relié au siège de raccordement (24);
dans laquelle le mécanisme de transmission (22) comprend une couronne dentée fixe (222) et un train d'engrenages planétaires (223-226), le train d'engrenages planétaires est au moins partiellement disposé à l'intérieur de la couronne dentée fixe (222) ; le siège de raccordement (24) est pourvu d'une chambre de logement (240), dans laquelle la couronne dentée fixe (222) est au moins partiellement disposée, et une partie de la couronne dentée fixe (222) est en appui contre le siège de raccordement (24); et
dans laquelle la soupape électrique est pourvue d'un passage, dont une partie est disposée entre le siège de raccordement (24) et la couronne dentée fixe (222) de telle sorte que le passage soit en communication avec une partie de la chambre du manchon (250) située radialement à l'extérieur de la couronne dentée fixe (222) et à une extrémité inférieure d'un anneau magnétique du rotor (211) de l'ensemble de rotor (21) et à une extrémité supérieure du siège de raccordement (24), et dont une partie (2417) est disposée au niveau du siège de raccordement (24), et le passage met en communication la chambre du manchon (250) avec la chambre de corps de soupape (30).

2. Soupape électrique selon la revendication 1, dans laquelle le siège de raccordement (24) comporte une partie de communication (2416) et un trou de communication (2417), la partie de communication (2416) est disposée d'un côté du siège de raccordement (24), à proximité de la couronne dentée fixe (222), et est disposée selon la direction axiale du siège de raccordement (24); et
dans laquelle le trou de communication (2417) est disposé selon la direction axiale du siège de raccordement (24) et traverse le siège de raccordement (24).

3. Soupape électrique selon la revendication 2, dans laquelle un espace est prévu entre une face d'extrémité inférieure de la couronne dentée fixe (222) et le siège de raccordement (24), et une face d'extrémité inférieure de la partie de communication (2416) est plus proche du noyau de soupape (4) que ne l'est la face d'extrémité inférieure de la couronne dentée fixe (222) ; et
dans laquelle la partie de communication (2416) est en communication avec le trou de communication (2417) par l'espace entre la face d'extrémité inférieure de la couronne dentée fixe (222) et le siège de raccordement (24), et le passage comprend la partie de communication (2416), l'espace entre la face d'extrémité inférieure de la couronne dentée fixe (222) et le siège de raccordement (24), et le trou de communication (2417).

4. Soupape électrique selon la revendication 2, dans laquelle le trou de communication (2417) est disposé au-dessous de la partie de communication (2416) en communication avec le trou de communication (2417).

5. Soupape électrique selon la revendication 3 ou 4, dans laquelle le siège de raccordement (24) comprend une première partie étagée (2411) et une seconde partie étagée (2412), qui est plus proche du noyau de soupape (4) que ne l'est la première partie étagée (2411) ; la couronne dentée fixe (222) comporte une première partie de bride (2221), dont une surface inférieure est en appui contre la première partie étagée (2411) ; une face d'extrémité inférieure de la partie de communication (2416) est disposée au-dessous d'une face d'extrémité supérieure de la première partie étagée (2411) ; et dans laquelle la partie de communication (2416) est une partie concave de sorte qu'un espace prédéfini est prévu entre le siège de raccordement (24) au niveau de la partie de communication (2416) et une surface périphérique extérieure de la première partie de bride (2221).

6. Soupape électrique selon la revendication 5, dans laquelle le trou de communication (2417) traverse la seconde partie étagée (2412) selon la direction axiale, et un espace est prévu entre la face d'extrémité inférieure de la couronne dentée fixe (222) et une face d'extrémité supérieure de la seconde partie étagée (2412), et dans laquelle le passage comprend la partie de communication (2416), l'espace entre la face d'extrémité inférieure de la couronne dentée fixe (222) et la face d'extrémité supérieure de la seconde partie étagée, et le trou de communication (2417).

7. Soupape électrique selon la revendication 5, dans laquelle le siège de raccordement (24) comprend une partie de positionnement (2414) et une partie de sertissage (2415), la partie de positionnement (2414) étant disposée à une périphérie intérieure du siège de raccordement (24), et le nombre de parties de positionnement (2414) étant de deux ou plus ; la partie de sertissage (2415) est disposée à une partie supérieure du siège de raccordement (24) ; la couronne dentée fixe (222) comprend une partie correspondante (2222), qui est disposée à la surface périphérique extérieure de la première partie de bride (2221), et le nombre de parties correspondantes (2222) est le même que celui des parties de positionnement (2414) ; et
dans laquelle la partie correspondante (2222) est ajustée à la partie de positionnement (2414), et le siège de raccordement (24) est relié de manière fixe à la couronne dentée fixe (222) par sertissage.

8. Soupape électrique selon la revendication 6, dans laquelle la partie de positionnement (2414) est une partie concave, et la partie correspondante (2222) est une saillie adaptée à la partie de positionnement (2414) ; ou la partie de positionnement (2414) est une saillie, et la partie correspondante (2222) est une partie concave adaptée à la partie de positionnement (2414).

9. Soupape électrique selon la revendication 5, dans laquelle le train d'engrenages planétaires comprend un porte-satellites de sortie (2261), et la soupape électrique comprend en outre une tige de soupape (23), le porte-satellites de sortie étant relié de manière fixe à la tige de soupape (23) ou étant formé avec la tige de soupape (23) par moulage par injection ; le porte-satellites de sortie (2261) est au moins partiellement disposé dans la chambre de logement (240) du siège de raccordement (24) ; le porte-satellites de sortie (2261) est en appui contre la seconde partie étagée (2412); et
dans laquelle le siège de raccordement (24) comprend en outre un trou traversant (2417) qui est disposé axialement, et la tige de soupape (23) est reliée au noyau de soupape (4) à travers le trou traversant (2417).

10. Soupape électrique selon la revendication 6, dans laquelle le train d'engrenages planétaires comprend un porte-satellites de sortie (2261), et la soupape électrique comprend en outre une tige de soupape (23), le porte-satellites de sortie (2261) étant relié de manière fixe à la tige de soupape (23) ou étant formé avec la tige de soupape (23) par moulage par injection ; le porte-satellites de sortie (2261) est au moins partiellement disposé dans la chambre de logement (240) du siège de raccordement (24) ; le porte-satellites de sortie (2261) est en appui contre la seconde partie étagée (2412) ; et
dans laquelle le siège de raccordement (24) comprend en outre un trou traversant (2417), qui est disposé axialement, et la tige de soupape (23) est reliée au noyau de soupape (4) à travers le trou traversant (2417).

11. Soupape électrique selon l'une quelconque des revendications 2 à 4 ou des revendications 6 à 10, dans laquelle le siège de raccordement (24) comprend une partie de corps principal (241) et une seconde partie de bride (242), la seconde partie de bride (242) s'étend vers l'extérieur à partir d'une périphérie extérieure d'une paroi latérale de la partie de corps principal (241) dans la direction radiale ; et la soupape électrique comprend en outre un écrou de compression (5), qui est emmanché sur la périphérie extérieure radiale de la paroi latérale de la partie de corps principal (241), est en appui contre une surface supérieure de la seconde partie de bride (242), et est en liaison filetée avec l'ensemble de corps de soupape (3); et
dans laquelle la partie de communication (2416) et le trou de communication (2417) sont disposés à une périphérie intérieure de la paroi latérale de la partie de corps principal (241).

12. Soupape électrique selon la revendication 5, dans laquelle le siège de raccordement (24) comprend une partie de corps principal (241) et une seconde partie de bride (242), la seconde partie de bride (242) s'étendant vers l'extérieur à partir d'une périphérie extérieure d'une paroi latérale de la partie de corps principal (241) dans la direction radiale, et la soupape électrique comprend en outre un écrou de compression (5) qui est emmanché sur la périphérie extérieure radiale de la paroi latérale de la partie de corps principal (241), est en appui contre une surface supérieure de la seconde partie de bride (242), et est en liaison filetée avec l'ensemble de corps de soupape (3); et
dans laquelle la partie de communication (2416) et le trou de communication (2417) sont disposés à une périphérie intérieure de la paroi latérale de la partie de corps principal (241).

13. Soupape électrique selon la revendication 11, dans laquelle le noyau de soupape (4) comporte un passage d'orifice (41), et l'ensemble de corps de soupape (3) comporte un premier passage d'écoulement (311) et un second passage d'écoulement (312) ; et dans laquelle le passage d'orifice (41) est configuré pour mettre en communication le premier passage d'écoulement (311) avec le second passage d'écoulement (312) ou bloquer cette communication par rotation du noyau de soupape (4).
